# EUROPEAN PATENT APPLICATION

(11) **EP 2 946 987 A1**
(43) Date of publication of application: **25.11.2015**
(21) Application number: 13871922.4
(22) Date of filing: 25.12.2013
(51) Int. Cl.: B62D 25/10

(54) **VEHICLE HOOD STRUCTURE**

(30) Priority: 15.01.2013 JP 2013004739
(71) Applicant: TOYOTA JIDOSHA KABUSHIKI KAISHA, Toyota-shi, Aichi-ken, 471-8571 (JP)
(72) Inventor: IWANO, Yoshihiro, Toyota-shi Aichi 471-8571 (JP)
(74) Representative: Intès, Didier Gérard André
(86) International application number: PCT/JP2013/084726
(87) International publication number: WO 2014/112310

(57) **Abstract**

A hood structure for a vehicle includes longitudinal beads and diagonal beads. The longitudinal beads are formed at both the left and right sides of a front portion of a hood inner panel that structures a hood inner plate, and extend in the hood front and rear direction. The diagonal beads are formed at both the left and right sides of the front portion of the hood inner panel, and are provided at the hood width direction outer sides relative to the longitudinal beads. The diagonal beads are angled to the hood width direction outer sides towards a hood forward side, and extend toward headlamp portion sides in a hood closed state.

## Description

### Technical Field

The present invention relates to a hood structure for a vehicle.

### Related Art

A structure of a hood for a vehicle is known (for example, see Japanese Patent Application Laid-Open (JP-A) No. 2005-212510) that includes a hood outer panel, which structures a hood outer plate, and a hood inner panel, which structures a hood inner plate. In this structure, a hood lock reinforcement is provided for reinforcement in correspondence with, for example, a hood width direction central portion of a front portion of the hood inner panel.

### SUMMARY OF INVENTION

### Technical Problem

However, this structure does not provide reinforcement at the two hood width direction sides of the front portion of the hood inner panel. Thus, there is scope for improvement in regard to reducing the weight of the hood while assuring rigidity with respect to bending loads that act on the front portion of the hood inner panel.

In consideration of the circumstances described above, an object of the present invention is to provide a hood structure for a vehicle that may reduce the weight of a hood while assuring rigidity with respect to a bending load that acts on a front portion of a hood inner panel.

### Solution to Problem

A hood structure for a vehicle according to a first aspect of the present invention includes: a longitudinal bead that is formed at each of left and right sides of a front portion of a hood inner panel that structures a hood inner plate, each longitudinal bead extending in a hood front and rear direction; and a diagonal bead that is formed at each of the left and right sides of the front portion of the hood inner panel, each diagonal bead being provided at a hood width direction outer side relative to the corresponding longitudinal bead, being angled to the hood width direction outer side toward the hood forward side, and extending toward a headlamp portion side in a hood closed state.

According to the hood structure for a vehicle of the first aspect of the present invention, the longitudinal beads that extend in the hood front and rear direction and the diagonal beads that are angled to the hood width direction outer sides toward the hood forward side are formed at both the left and right sides of the front portion (a region at the hood forward side) of the hood inner panel. In consequence, for example, when a load acts on the front portion of the hood inner panel from the hood forward side, bending deformation of the front portion of the hood inner panel is suppressed by the longitudinal beads and diagonal beads bracing against the load.

As a further example, when a load acts on the front portion of the hood inner panel from the hood upper side, bending deformation of the front portion of the hood inner panel is suppressed by the longitudinal beads and diagonal beads bracing against the load. Because each diagonal bead is provided at the hood width direction outer side relative to the longitudinal bead and extends toward the headlamp portion side in the hood closed state, when the load acts from the hood upper side, a portion of the load that is transmitted to the diagonal bead is partially borne by the headlamp portion. Thus, bending deformation of the front portion of the hood inner panel is effectively suppressed.

In a hood structure for a vehicle according to a second aspect of the present invention, in the first aspect of the present invention, each diagonal bead does not cross the corresponding longitudinal bead.

According to the hood structure for a vehicle of the second aspect of the present invention, because each diagonal bead does not cross the longitudinal bead, when a bending load acts on the front portion of the hood inner panel, loads that are transmitted by the diagonal bead and the longitudinal bead are dispersed in plural directions rather than being combined.

In a hood structure for a vehicle according to a third aspect of the present invention, in the first or second aspect of the present invention, an outer periphery bead is formed along an outer periphery portion of the hood inner panel, and a hood forward side end portion of each diagonal bead connects with the outer periphery bead.

According to the hood structure for a vehicle of the third aspect of the present invention, because the outer periphery bead is formed along the outer periphery portion of the hood inner panel, torsional rigidity of the hood inner panel is improved and operability when the hood is being opened or closed is excellent. Further, because the end portion at the hood forward side of each diagonal bead connects with the outer periphery bead, a portion of a load that is transmitted to the diagonal bead is partially borne by the outer periphery bead.

In a hood structure for a vehicle according to a fourth aspect of the present invention, in the first or second aspect of the present invention, a framework portion is formed at a central region of the hood inner panel, and a hood rearward side end portion of each diagonal bead connects with the framework portion.

According to the hood structure for a vehicle of the fourth aspect of the present invention, because the framework portion is formed at the central region of the hood inner panel and the end portion at the hood rearward side of each diagonal bead connects with the framework portion, a portion of a load that is transmitted to the diagonal bead is partially borne by the framework portion.

### Advantageous Effects of Invention

As described hereabove, according to the hood structure for a vehicle in accordance with the first aspect of the present invention, an excellent effect is provided in that the hood may be reduced in weight while rigidity with respect to a bending load acting on the front portion of the hood inner panel may be assured.

According to the hood structure for a vehicle in accordance with the second aspect of the present invention, an excellent effect is provided in that, when a bending load acts on the front portion of the hood inner panel, the load may be effectively dispersed.

According to the hood structure for a vehicle in accordance with the third aspect of the present invention, an excellent effect is provided in that, when a bending load acts on the front portion of the hood inner panel, a portion of the load that is transmitted to a diagonal bead may be partially borne by the outer periphery bead, and thus local deformation at a front end side vicinity of the diagonal bead may be effectively suppressed.

According to the hood structure for a vehicle in accordance with the fourth aspect of the present invention, an excellent effect is provided in that, when a bending load acts on the front portion of the hood inner panel, a portion of the load that is transmitted to a diagonal bead may be partially borne by the framework portion, and thus local deformation at a rear end side vicinity of the diagonal bead may be effectively suppressed.

### BRIEF DESCRIPTION OF DRAWINGS

Fig. 1 is a perspective view showing a vehicle front portion equipped with a hood that employs a hood structure for a vehicle in accordance with an exemplary embodiment of the present invention.
Fig. 2 is a bottom view showing the hood of Fig. 1 in a state in which the hood is viewed from a lower face side.
Fig. 3 is a side view showing a state in which the vehicle of Fig. 1 has had a frontal collision.
Fig. 4A shows attached states of a hood left end in a graph comparing attached states of the hood structure for a vehicle in accordance with the exemplary embodiment of the present invention and of a comparative structure.
Fig. 4B shows attached states of a hood right end in a graph comparing attached states of the hood structure for a vehicle in accordance with the exemplary embodiment of the present invention and of the comparative structure.
Fig. 5 is a graph showing relationships between acceleration and displacement when a collision object is colliding with a hood front portion.

### DESCRIPTION OF EMBODIMENTS

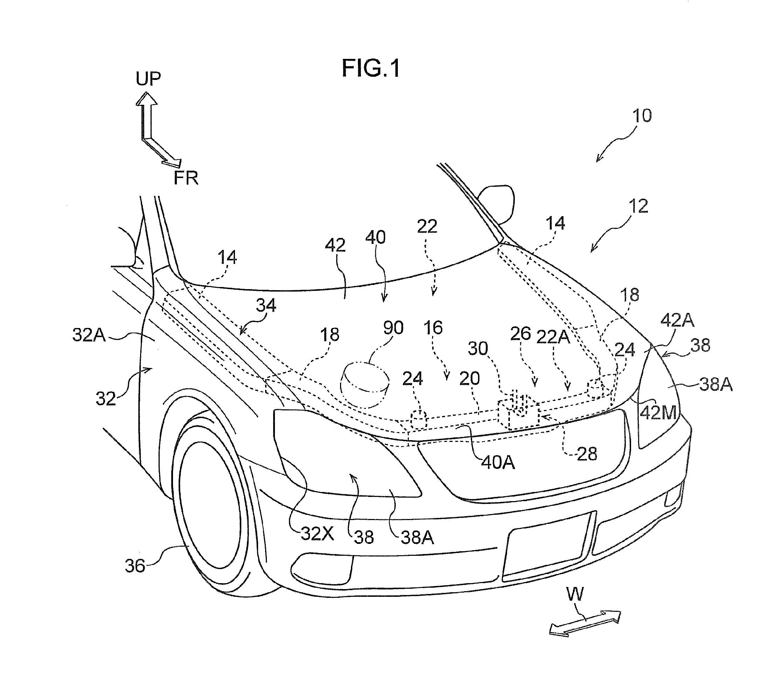

Structure of an Exemplary Embodiment: A hood structure for a vehicle according to an exemplary embodiment of the present invention is described using Fig. 1 to Fig. 5. An arrow FR that is shown as appropriate in these drawings indicates a vehicle forward side, an arrow UP indicates a vehicle upper side, and an arrow W indicates a vehicle width direction. In a hood closed state, a hood forward side is in the same direction as the vehicle forward side and a hood upper side is in the same direction as the vehicle upper side.

Fig. 1 shows a perspective view of a vehicle front portion 12 of an automobile (a vehicle) 10. As shown in Fig. 1, apron upper members 14 are disposed along the vehicle body front and rear direction at upper portions at the two vehicle width direction end sides of the vehicle front portion 12. Front end portions of the apron upper members 14 are joined to rear end portions of radiator support upper sides 18. Each radiator support upper side 18 extends from the rear end portion thereof to the vehicle forward side, diagonally toward the vehicle width direction inner side.

Front end portions of the radiator support upper sides 18 are joined to two vehicle width direction end portions of a radiator support upper 20. The radiator support upper 20 is disposed at an upper portion of the vehicle body front end side, with a longitudinal direction of the radiator support upper 20 being in the vehicle width direction. The radiator support upper 20 supports an upper portion of a radiator (not shown in the drawings). A radiator support 16 that is equipped with the radiator support upper sides 18 and the radiator support upper 20 is structured in a substantially rectangular frame shape in a front view, but is not shown in the drawings. Rubber stoppers 24 for shock absorption are attached to upper portions of the two vehicle width direction end sides of the radiator support upper 20.

The apron upper members 14, the radiator support upper sides 18 and the radiator support upper 20 are disposed inside an engine compartment 22. The engine compartment 22 is openably and closeably covered by a hood 40 (an engine hood, which is a component that can be broadly understood as an "opening and closing body"). In descriptions of the hood 40 and portions thereof, a hood forward side end portion is simply referred to as "the front end portion" and a hood rear side end portion is simply referred to as "the rear end portion". The hood 40 is attached to the apron upper members 14 via hinges (not shown in the drawings) disposed at the rear end portion. The hood 40 moves to turn about hinge axes of the hinges, which are in the vehicle width direction, and may open and close the engine compartment 22 (i.e., an aperture portion 22A in a vehicle body front portion). In the closed state of the hood 40, the apron upper members 14, the radiator support upper sides 18 and the radiator support upper 20 are disposed at the vehicle lower side of the hood 40.

Fender panels 32 (also referred to as "front fender panels") are disposed sideward of the hood 40, that is, at side faces of the vehicle front portion 12. Boundaries between the hood 40 and the fender panels 32 are corner portions 34. The corner portions 34 extend substantially in the vehicle front and rear direction at the two vehicle width direction end portions of the hood 40. Each fender panel 32 covers the upper side of a front wheel 36 and is provided with an outer side vertical wall portion 32A that structures a design surface. A cutaway portion 32X is formed at a front end upper portion of each outer side vertical wall portion 32A. The cutaway portion 32X is cut away so as to be hollowed in a recess shape from the vehicle forward side thereof. A headlamp portion 38 is provided adjacent to the cutaway portion 32X.

The headlamp portion 38 is for illumination forward of the vehicle, and is provided with a high-rigidity housing (not shown in the drawings) that accommodates a light source (not shown in the drawings). A lamp lens 38A is disposed at an aperture portion at the vehicle forward side of the housing. The lamp lens 38A structures a design surface of the vehicle and is formed of a transparent, hard material. Thus, the headlamp portion 38 is provided with high rigidity.

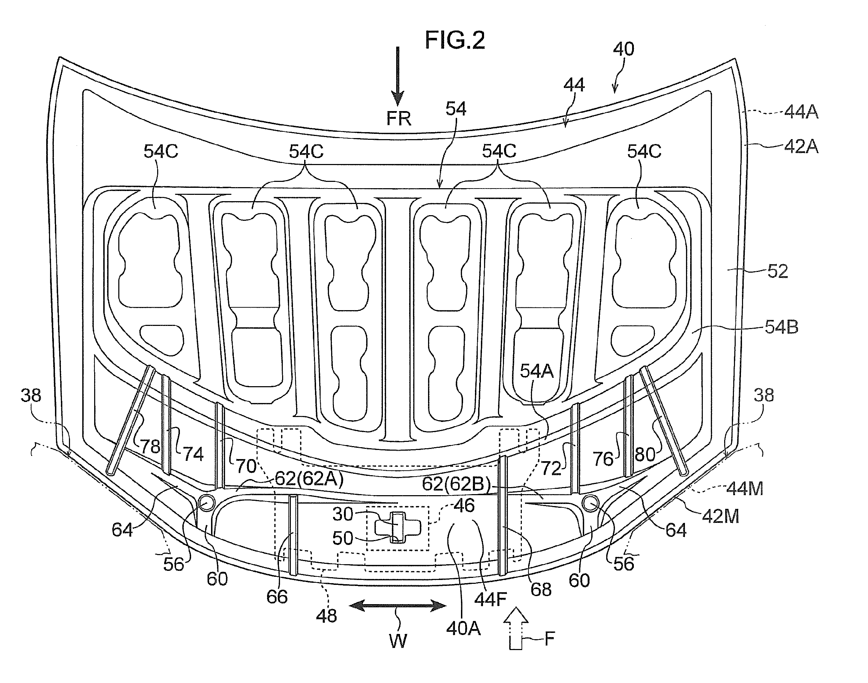

The hood 40 is provided with a hood outer panel 42 that structures an outer plate of the hood 40 (an outer side portion, which is an upper portion in the closed state). The hood 40 is also provided with a hood inner panel 44 (see Fig. 2) that is disposed at the hood lower side relative to the hood outer panel 42 and that structures an inner plate of the hood 40 (an inner side portion, which is a lower portion in the closed state). Fig. 2 shows the hood 40 provided with the hood inner panel 44 in a bottom view (a view in a state in which the hood 40 is seen from the hood lower side). An outer periphery edge portion 42A of the hood outer panel 42, which is shown in Fig. 1, and an outer periphery edge portion 44A of the hood inner panel 44, which is shown in Fig. 2, are joined to one another by hemming. In the state in which the hood outer panel 42 shown in Fig. 1 and the hood inner panel 44 shown in Fig. 2 have been assembled, the two panels form a closed cross section structure; a space is formed in the hood upper and lower direction between the two panels.

In the bottom view, a hood width direction central portion of a front end edge portion 44M of the hood inner panel 44 bulges to the hood forward side relative to the two hood width direction side portions of the front end edge portion 44M. Similarly, in the bottom view, a hood width direction central portion of a front end edge portion 42M of the hood outer panel 42 shown in Fig. 1 bulges to the hood forward side relative to the two hood width direction side portions of the front end edge portion 42M. The two hood width direction side portions of the front end edge portion 42M of the hood outer panel 42 are disposed adjacent to the upper sides of upper edge portions of the aforementioned lamp lenses 38A.

A hood lock portion 26 is disposed in correspondence with a hood width direction central portion of a front end portion 40A of the hood 40 in the closed state. The hood lock portion 26 includes a hood lock device 28 (which is shown as a block in the drawings) and a striker 30. The hood lock device 28 is disposed at the radiator support upper 20, inside the engine compartment 22. The striker 30 is disposed at the hood 40. The striker 30 is formed in an inflected shape of which the hood upper side is open in a vehicle side view (a substantial "U" shape). A latch (not shown in the drawings) that structures a portion of the hood lock device 28 is engageable with the striker 30. In the state in which the latch is engaged with the striker 30, the front end portion 40A of the hood 40 is pulled down to the hood lower side.

As shown in Fig. 2, a penetrating hole 50 is formed penetrating through a central portion of a front portion 44F of the hood inner panel 44 (a region (a front portion region) at the hood forward side relative to a framework portion 54, which is described below). The penetrating hole 50 is for insertion of the striker 30 from the hood upper side thereof. A pair of front and rear mounting base end portions of the striker 30 are bent to one side and another side in the vehicle width direction (not shown in the drawings) and the striker 30 is fixed to a baseplate 46 at the hood upper side of the hood inner panel 44. The baseplate 46 is fixed to a hood lock reinforcement 48 (which is a component that can be broadly understood as a "reinforcing member").

The hood lock reinforcement 48 is formed in a plate shape. The hood lock reinforcement 48 is disposed between the hood outer panel 42 (see Fig. 1) and the hood inner panel 44 for reinforcement of a hood width direction central portion of the front end portion 40A of the hood 40. A penetrating hole (not shown in the drawings) that corresponds with the penetrating hole 50 of the hood inner panel 44 is formed penetrating through the hood lock reinforcement 48. The hood lock reinforcement 48 is welded to the hood inner panel 44 at portions surrounding the penetrating hole 50. Thus, the hood lock reinforcement 48 reinforces the hood 40 in the vicinity of a striker mounting portion.

An outer periphery bead 52 is formed along an outer periphery portion of the hood inner panel 44 that structures the inner face of the hood 40. The outer periphery bead 52 is formed in a shape that protrudes to the hood lower side. The outer periphery bead 52 runs around the outer periphery portion of the hood inner panel 44, and the framework portion 54 is formed at a central region of the hood inner panel 44.

The framework portion 54 is provided at the hood inner panel 44, at the inner side of the outer periphery bead 52 and at the hood rearward side relative to the mounting portion of the striker 30. In the present exemplary embodiment, the framework portion 54 is specified to be disposed mainly at the hood upper side relative to surrounding portions. A front wall portion 54A is formed at a front end portion of the framework portion 54. The front wall portion 54A stands toward the hood upper side. A flat portion 54B is also formed at the framework portion 54, at the hood rearward side of the front wall portion 54A, in a substantial "U" shape in the hood bottom view. The flat portion 54B is provided with a general surface thereof being a surface that includes the hood width direction as a surface direction. Plural projection portions 54C are also formed at the framework portion 54. The projection portions 54C are formed at the inner side of the flat portion 54B, in substantial "U" shapes in the hood bottom view. The projection portions 54C are provided in order to raise the rigidity of central regions of the hood inner panel 44. The projection portions 54C are formed so as to form shapes that protrude to the hood upper side, and are arranged side by side in the hood width direction with predetermined spacings therebetween. Aperture portions are formed in top portions of the projection portions 54C, in order to reduce weight. Portions of the top portions of the projection portions 54C are joined to a rear face of the hood outer panel 42 (see Fig. 1) via an adhesive (a mastic).

Stopper abutting portions 56 are formed at both left and right sides in the hood width direction of the front portion 44F of the hood inner panel 44, at the hood forward side relative to the framework portion 54. The stopper abutting portions 56 are specified to be disposed to abut against the rubber stoppers 24 mentioned above (see Fig. 1) in the closed state of the hood 40. Consequently, when the hood 40 is closed, the rubber stoppers 24 shown in Fig. 1 are interposed between the stopper abutting portions 56 of the hood 40 (see Fig. 2) and the radiator support upper 20.

As shown in Fig. 2, reinforcing protrusion portions 60, 62 and 64 are formed at the hood inner panel 44, extending in plural directions (three directions in the present exemplary embodiment) from each stopper abutting portion 56. The reinforcing protrusion portions 60, 62 and 64 are all formed so as to form shapes that protrude to the hood upper side. The plural (threes in the present exemplary embodiment) reinforcing protrusion portions 60, 62 and 64 are all specified to not be arranged in line with one another along straight lines. In the present exemplary embodiment, the reinforcing protrusion portions 60, 62 and 64 at the vehicle left side and the reinforcing protrusion portions 60, 62 and 64 at the vehicle right side are specified to have general left-right symmetry. The reinforcing protrusion portions with symmetric relationships are assigned the same reference numerals.

Each first reinforcing protrusion portion 60, which is one of the plural reinforcing protrusion portions 60, 62 and 64, extends to the hood forward side from the stopper abutting portion 56 and connects with the outer periphery bead 52. In contrast, the other two of the reinforcing protrusion portions 60, 62 and 64, the second reinforcing protrusion portion 62 and the third reinforcing protrusion portion 64, are not connected with the outer periphery bead 52. The second reinforcing protrusion portion 62 extends to the hood width direction inner side from the stopper abutting portion 56. The left side second reinforcing protrusion portion 62 (62A) extends as far as a hood width direction central portion, which is a region at which the hood inner panel 44 overlaps with the hood lock reinforcement 48 in a hood plan view. In contrast, the right side second reinforcing protrusion portion 62 (62B) does not extend to the region at which the hood inner panel 44 overlaps with the hood lock reinforcement 48 in the hood plan view. Each third reinforcing protrusion portion 64 extends diagonally to the hood width direction outer side and the rearward side from the stopper abutting portion 56.

Longitudinal beads 66 and 68 are formed at both the left and right sides of the front portion 44F of the hood inner panel 44. The longitudinal beads 66 and 68 are formed at the two sides of the region that overlaps with the hood lock reinforcement 48 in the hood plan view. The longitudinal beads 66 and 68 are formed so as to form shapes that protrude to the hood upper side, and extend in the hood front and rear direction. Front end portions of the longitudinal beads 66 and 68 connect with the outer periphery bead 52. A rear end portion of the left side longitudinal bead 66 connects with a front end portion of the second reinforcing protrusion portion 62 (62A). A rear end portion of the right side longitudinal bead 68 connects with the front wall portion 54A of the framework portion 54.

Further, longitudinal beads 70 and 72 are formed at both the left and right sides of the front portion 44F of the hood inner panel 44, at the hood width direction outer sides relative to the longitudinal beads 66 and 68 described above. The longitudinal beads 70 and 72 are specified to be at the hood width direction outer sides relative to the region of the hood inner panel 44 that overlaps with the hood lock reinforcement 48 in the hood plan view. The longitudinal beads 70 and 72 are formed so as to form shapes that protrude to the hood upper side, and extend in the hood front and rear direction. Front end portions of the longitudinal beads 70 and 72 connect with rear end portions of the second reinforcing protrusion portions 62 at the hood width direction outer sides of the reinforcing protrusion portions 62. Rear end portions of the longitudinal beads 70 and 72 connect with the front wall portion 54A and flat portion 54B of the framework portion 54. Thus, the longitudinal beads 70 and 72 link the second reinforcing protrusion portions 62 with the framework portion 54.

Further yet, longitudinal beads 74 and 76 are formed at both the left and right sides of the front portion 44F of the hood inner panel 44, at the hood width direction outer sides relative to the longitudinal beads 70 and 72 described above. The longitudinal beads 74 and 76 are formed so as to form shapes that protrude to the hood upper side, and extend in the hood front and rear direction. Front end portions of the longitudinal beads 74 and 76 connect with rear end portions of the third reinforcing protrusion portions 64 at the hood width direction outer sides of the third reinforcing protrusion portions 64. Rear end portions of the longitudinal beads 74 and 76 connect with the front wall portion 54A and flat portion 54B of the framework portion 54. Thus, the longitudinal beads 74 and 76 link the third reinforcing protrusion portions 64 with the framework portion 54.

Diagonal beads 78 and 80 are formed at both the left and right sides of the front portion 44F of the hood inner panel 44, at the hood width direction outer sides relative to the longitudinal beads 66, 68, 70, 72, 74 and 76. The diagonal beads 78 and 80 are formed so as to form shapes that protrude to the hood upper side. The diagonal beads 78 and 80 extend in directions that are angled to the hood width direction outer sides toward the hood forward side, that are oriented toward sides at which the headlamp portions 38 (see Fig. 1) are disposed in the hood closed state, and that are roughly orthogonal to the headlamp portions 38. The diagonal beads 78 and 80 are formed to not cross the longitudinal beads 66, 68, 70, 72, 74 and 76 and to not cross the reinforcing protrusion portions 60, 62 and 64.

Front end portions of the diagonal beads 78 and 80 connect with the outer periphery bead 52. Rear end portions of the diagonal beads 78 and 80 connect with the front wall portion 54A and flat portion 54B of the framework portion 54. Thus, the diagonal beads 78 and 80 link the outer periphery bead 52 with the framework portion 54.

Operation and Effects of the Exemplary Embodiment: Now, operations and effects of the above exemplary embodiment are described.

In the present exemplary embodiment, the longitudinal beads 66, 68, 70, 72, 74 and 76 that extend in the hood front and rear direction and the diagonal beads 78 and 80 that are angled to the hood width direction outer sides toward the hood forward side are formed at both the left and right sides of the front portion 44F of the hood inner panel 44. Therefore, when a load F acts on the front portion 44F of the hood inner panel 44 from the hood forward side, bending deformation of the front portion 44F of the hood inner panel 44 is suppressed by the longitudinal beads 66, 68, 70, 72, 74 and 76 and diagonal beads 78 and 80 bracing against the load.

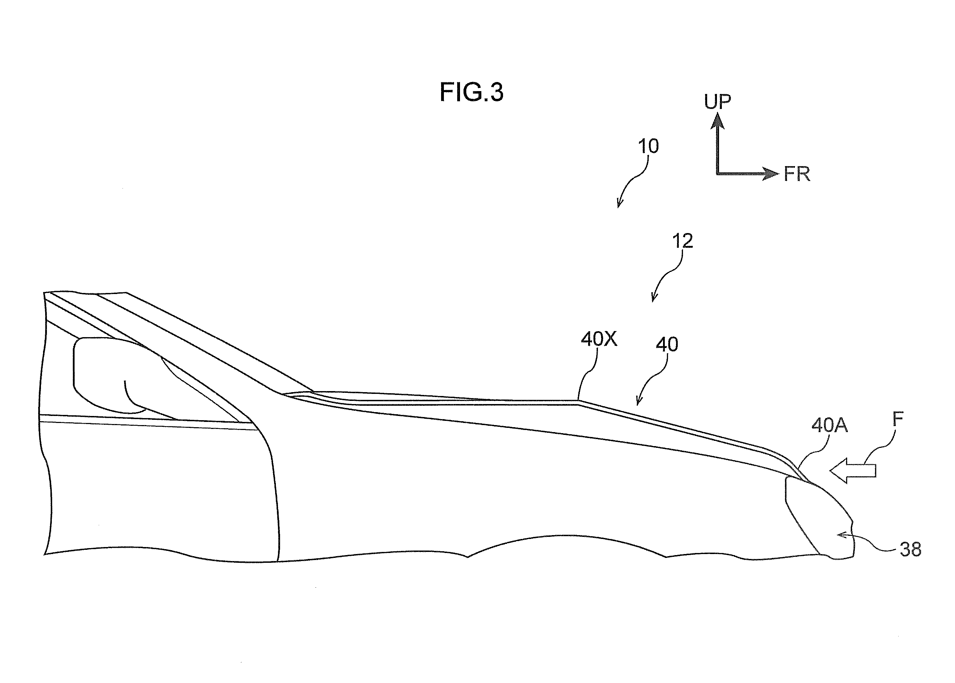

In Fig. 3, a state of deformation of the hood 40 when the automobile 10 shown in Fig. 1 has had a frontal collision is shown in a side view. As shown in Fig. 3, bending deformation of the front end portion 40A is suppressed and the hood 40 is subjected to bending deformation at an intermediate portion 40X in the hood front and rear direction. Thus, pushback (movement to the vehicle rearward side) of the rear end portion of the hood 40 is suppressed. That is, collision performance (damageability performance) during a frontal collision of the automobile 10 may be improved even though an increase in weight of the hood 40 is moderated.

Further, for example, if an impacter 90, which is represented by two-dot chain lines in Fig. 1, collides with the front portion of the hood 40 diagonally from the hood forward-upper side and a load acts on the front portion 44F of the hood inner panel 44 shown in Fig. 2, the longitudinal beads 66, 68, 70, 72, 74 and 76 and diagonal beads 78 and 80 brace against the load. Therefore, bending deformation of the front portion 44F of the hood inner panel 44 is suppressed, as a result of which bending deformation of the front portion of the hood 40 is suppressed.

In this structure, the diagonal beads 78 and 80 are provided at the hood width direction outer sides relative to the longitudinal beads 66, 68, 70, 72, 74 and 76, and extend toward the sides at which the headlamp portions 38 are disposed in the closed state of the hood 40 (see Fig. 1). Therefore, when a load acts from the hood upper side, a portion of the load that is transmitted to either of the diagonal beads 78 and 80 is partially borne by the high-rigidity headlamp portion 38 (see Fig. 1). Thus, bending deformation of the front portion 44F of the hood inner panel 44 is effectively suppressed.

In the present exemplary embodiment, the diagonal beads 78 and 80 are formed to not cross the longitudinal beads 66, 68, 70, 72, 74 and 76. Therefore, when a bending load acts on the front portion 44F of the hood inner panel 44, loads that are transmitted by the diagonal beads 78 and 80 and the longitudinal beads 66, 68, 70, 72, 74 and 76 do not combine but are dispersed in plural directions. Therefore, loads can be effectively dispersed.

In the present exemplary embodiment, because the outer periphery bead 52 is formed along the outer periphery portion of the hood inner panel 44, torsional rigidity of the hood inner panel 44 is improved and operability during opening and closing of the hood 40 is excellent. Furthermore, because the front end portions of the diagonal beads 78 and 80 connect with the outer periphery bead 52, a portion of a load that is transmitted to either of the diagonal beads 78 and 80 is partially borne by the outer periphery bead 52. Therefore, local deformations in vicinities of the front end sides of the diagonal beads 78 and 80 are effectively suppressed.

In the present exemplary embodiment, because the framework portion 54 is formed at the central region of the hood inner panel 44 and the rear end portions of the diagonal beads 78 and 80 connect with the framework portion 54, a portion of a load that is transmitted to either of the diagonal beads 78 and 80 is partially borne by the framework portion 54. Therefore, local deformations in vicinities of the rear end sides of the diagonal beads 78 and 80 are effectively suppressed.

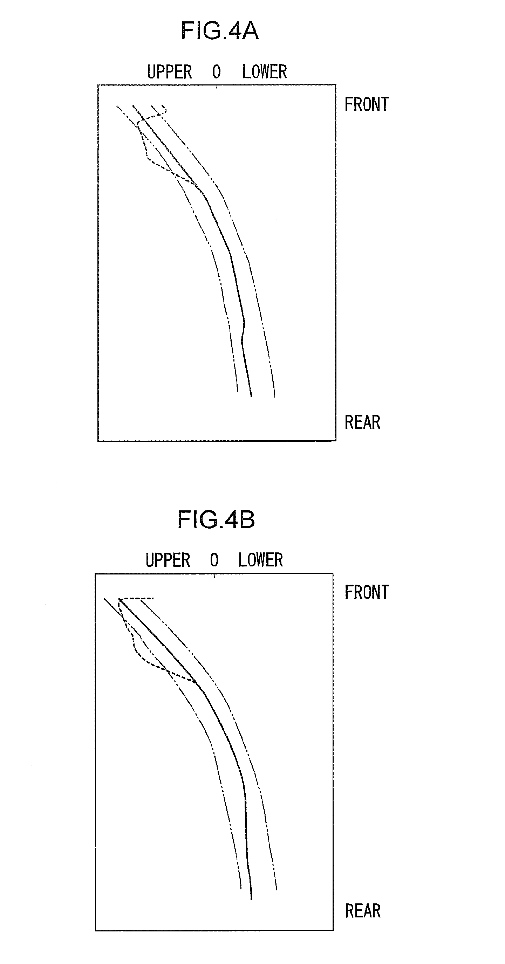

Now, a supplementary description is given while referring to graphs in Fig. 4A and Fig. 4B that show measurement results in an attached state. The term "attached state" specifically refers to the state in which the hood front end is pulled down by the hood lock. Fig. 4A represents the attached state at the hood left side, and Fig. 4B represents the attached state at the hood right side. The vertical axes in these drawings represent positions in the vehicle front and rear direction, and the horizontal axes represents offset amounts in the vehicle upper and lower direction by reference to a height position of the hood front end in a state in which the hood is not locked (a state in which the hood front end is not pulled down).

The solid line in each graph shows results for the hood 40 in which the hood structure for a vehicle according to the present exemplary embodiment is employed, and the dotted line in each graph shows results for a hood in which a comparative structure is employed. The comparative structure is a structure in which the longitudinal beads 66, 68, 70, 72, 74 and 76 and diagonal beads 78 and 80 of the hood structure for a vehicle according to the present exemplary embodiment are not formed. The comparative structure has the same structure as the hood structure for a vehicle according to the present exemplary embodiment in other respects. The two-dot chain lines in each graph show upper and lower limits of a preferable range.

As is shown in Fig. 4A and Fig. 4B, in the hood of the comparative structure (see the dotted lines), the front portion locally recesses to the vehicle lower side at both left and right. In contrast, in the hood 40 in which the hood structure for a vehicle according to the present exemplary embodiment is employed, as shown by the solid lines in the graphs, local recessing of the front portion is suppressed at both left and right. Thus, attachment of the hood 40 is excellently established.

To add to these descriptions, if measures are taken to reduce the weight of the hood inner panel (the hood)-simply reducing the plate thickness or changing the material from steel to an aluminum alloy, a resin material or the like-a predetermined rigidity may not be assured, as in the comparative structure mentioned above. However, with the present exemplary embodiment, a predetermined rigidity is assured even with the same plate thickness and the same material as the comparative structure. Therefore, attachment performance may be assured even while the hood is reduced in weight and costs are lowered. Moreover, because a predetermined rigidity may be assured at both sides of the front portion of the hood 40 shown in Fig. 2, including portions surrounding the stopper abutting portions 56, there is no need to attach separate reinforcing members or enlarge the hood lock reinforcement 48 to the hood width direction outer sides thereof. Even if the weight of components that are supported by the front portion 44F of the hood inner panel 44 increases, bending deformation of the front portion 44F of the hood inner panel 44 may be prevented even while an increase in overall weight of the hood 40 is suppressed compared to a case of reinforcing with a reinforcing member other than the hood inner panel 44.

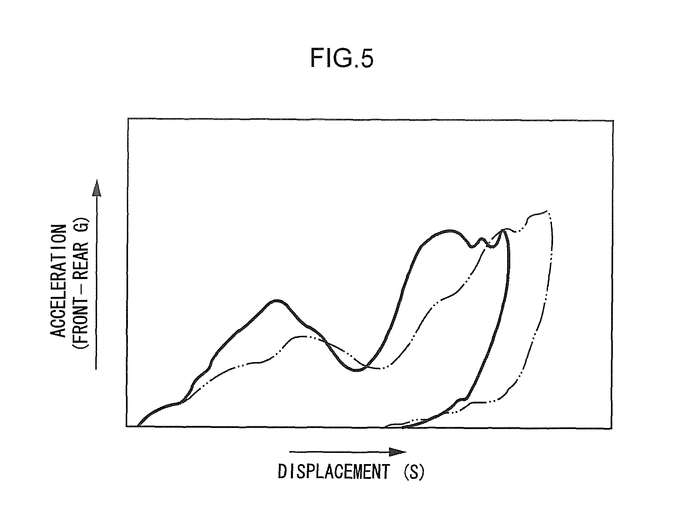

Now, a supplementary description is given of operation in relation to pedestrian protection performance using Fig. 5, which shows an acceleration-displacement characteristic (G-S characteristic). Fig. 5 shows acceleration-displacement curves (G-S curves; pedestrian protection test results), which illustrate relationships between acceleration (front-rear G, which is negative acceleration but is shown by absolute values in Fig. 5) and displacement amounts (S) when a collision body (an impacter) collides with a front end side portion of the hood diagonally from the vehicle upper-forward side. The solid line shown in Fig. 5 illustrates the acceleration-displacement characteristic when the hood structure for a vehicle according to the present exemplary embodiment is employed, and the two-dot chain line illustrates the acceleration-displacement characteristic when a hood structure for a vehicle according to a comparative structure is employed. The comparative structure is a structure in which the longitudinal beads 66, 68, 70, 72, 74 and 76 and diagonal beads 78 and 80 of the hood structure for a vehicle according to the present exemplary embodiment are not formed. As can be seen from the graphs in Fig. 5, when the hood structure for a vehicle according to the present exemplary embodiment is employed, the values of acceleration in the initial stage of the collision (front-rear G) are higher and the values of acceleration (front-rear G) in the final phase of the collision are correspondingly suppressed. Thus, excellent energy absorption (EA) is realized. That is, pedestrian protection performance is improved.

As described above, according to the hood structure for a vehicle in accordance with the present exemplary embodiment, the hood 40 as shown in Fig. 2 and such may be reduced in weight while rigidity with respect to a bending load acting on the front portion 44F of the hood inner panel 44 may be assured.

Supplementary Descriptions of the Embodiments: The number of the longitudinal beads formed at the hood inner panel may be set to a different number from the exemplary embodiment described above.

As a variant example of the exemplary embodiment described above, a structure may be employed in which diagonal beads that cross the longitudinal beads are formed at the hood inner panel. As a further variant example of the above exemplary embodiment, a structure may be employed in which the front end portions of the diagonal beads do not connect with the outer periphery bead. As a yet further variant example of the above exemplary embodiment, a structure may be employed in which the rear end portions of the diagonal beads do not connect with the framework portion.

The exemplary embodiment described above and the numerous variant examples mentioned above may be embodied in suitable combinations.

Hereabove, an example of the present invention has been described. The present invention is not limited by these descriptions, and it will be clear that numerous modifications outside of these descriptions may be embodied within a technical scope not deviating from the gist of the invention.

## Claims

1. A hood structure for a vehicle comprising:
a longitudinal bead that is formed at each of left and right sides of a front portion of a hood inner panel that structures a hood inner plate, each longitudinal bead extending in a hood front and rear direction; and
a diagonal bead that is formed at each of the left and right sides of the front portion of the hood inner panel, each diagonal bead being provided at a hood width direction outer side relative to a corresponding longitudinal bead, being angled to the hood width direction outer side toward a hood forward side, and extending toward a headlamp portion side in a hood closed state.

2. The hood structure for a vehicle according to claim 1, wherein each diagonal bead does not cross a corresponding longitudinal bead.

3. The hood structure for a vehicle according to claim 1 or claim 2, wherein an outer periphery bead is formed along an outer periphery portion of the hood inner panel, and a hood forward side end portion of each diagonal bead connects with the outer periphery bead.

4. The hood structure for a vehicle according to claim 1 or claim 2, wherein a framework portion is formed at a central region of the hood inner panel, and a hood rearward side end portion of each diagonal bead connects with the framework portion.
